# EUROPÄISCHE PATENTSCHRIFT

(11) **EP 1 387 808 B1**
(45) Veröffentlichungstag und Bekanntmachung des Hinweises auf die Patenterteilung: **02.11.2005**
(21) Anmeldenummer: 02740229.6
(22) Anmeldetag: 05.04.2002
(51) Int. Cl.: B65G 54/00, B65G 47/90, G10K 15/00

(54) **VORRICHTUNG ZUM BERÜHRUNGSLOSEN GREIFEN UND HALTEN EINES GEGENSTANDES**
DEVICE FOR GRIPPING AND HOLDING AN OBJECT IN A CONTACTLESS MANNER
DISPOSITIF POUR SAISIR ET TENIR UN OBJET SANS CONTACT

(30) Priorität: 04.05.2001 DE 10121742
(43) Veröffentlichungstag der Anmeldung: 11.02.2004
(73) Patentinhaber: ROBERT BOSCH GMBH, 70442 Stuttgart (DE)
(72) Erfinder: HOEHN, Michael, 74372 Sersheim (DE); HOEPPNER, Juergen, 85777 Fahrenzhausen (DE)
(86) Internationale Anmeldenummer: PCT/DE2002/001238
(87) Internationale Veröffentlichungsnummer: WO 2002/090222

(56) Entgegenhaltungen:
- JP-A- 6 249 640
- JP-A- 61 136 818
- US-A- 4 284 403
- US-A- 4 777 823
- US-A- 5 096 017
- JU JIN; JONG OP JEAON; TOSHIRO HIGUCHI: "Direct Electrostatic Levitation and Propulsion of Silicon Wafer" IEEE TRANSACTIONS OF INDUSTRIAL ELECTRONICS, Bd. 421, Nr. 5, Seiten 1994-2001,

## Beschreibung

Die Erfindung betrifft eine Vorrichtung zum berührungslosen Greifen und Halten eines Gegenstandes von einer in Richtung der Schwerkraft gerichteten Richtung nach dem Oberbegriff des Anspruchs 1.

Eine Vorrichtung mit den Merkmalen des Oberbegriffs des Anspruchs 1 ist aus dem Dokument US-A-5 096 017 bekannt.

### Stand der Technik

Beispielsweise in der Halbleiterfertigung und der Mikrosystemtechnik sind zahlreiche Bauelemente an ihrer Oberfläche mit berührungsempfindlichen Strukturen versehen. Entsprechende Bauelemente weisen u.a. bewegliche, filigrane Ätzstrukturen, wie Membranen, Zungen oder Brücken, möglicherweise als Komponenten für Druck- oder Beschleunigungssensoren, auf. Zur Vermeidung von Beeinträchtigungen erfordert dies ein berührungsloses Greifen und Halten des Bauteils.

Darüber hinaus könnten durch einen mechanischen Kontakt des Greifers mit der Bauteiloberfläche Partikel abgerieben bzw. erzeugt und gegebenenfalls auf die Bauteiloberfläche verschleppt werden, was sich nachteilig auf die Ausbeute der Fertigung auswirkt.

Weiterhin können Bauteile mit empfindlichen Oberflächen bzw. -beschichtungen, wie z.B. frisch lackierte Bauteile oder dergleichen in nahezu allen technischen Bereichen, ebenfalls berührungslos ergriffen bzw. gehalten werden.

In bestimmten Anwendungsfällen kann das Bauteil lediglich von oben, d.h. von der in Richtung der Schwerkraft gerichteten Richtung, ergriffen bzw. gehalten werden, z.B. beim Ergreifen eines auf einer Lagerfläche bzw. einer Transportvorrichtung abgelegten Bauteils oder zum Aufbringen bzw. Fügen des Bauteils auf einem vorgegebenen Gegenstand bzw. einer Ablage. Entsprechende Anwendungsfälle sind beispielsweise beim Verkleben von Halbleiterscheiben bzw. beim sogenannten Waferbonden gegeben, wobei das entsprechende Bauteil genau und mit einem definierten Anpressdruck auf ein Bauelement aufzubringen ist, ohne entsprechende Strukturen bzw. Oberflächen zu beschädigen. Für diese Anwendungsfälle können keine Greifer bzw. Halter verwendet werden, die das zu haltende Bauteil von zwei entgegengesetzten Seiten halten oder greifen.

Ein entsprechend einseitiger, berührungsloser Greifer bzw. Halter ist beispielsweise aus der Druckschrift DE 198 06 306 bekannt. Diese Druckschrift offenbart eine Vorrichtung, bei der mittels pneumatischer Zug- und Druckkräfte der entsprechende Gegenstand in Richtung der Schwerkraft unterhalb eines Halteelementes berührungslos angeordnet ist.

Nachteilig hierbei ist jedoch, dass zur Erzeugung der pneumatischen Zug- und Druckkräfte Gas aus entsprechenden Ausströmöffnungen ausströmt bzw. in Einströmöffnungen eingesaugt wird, was zu einer Partikelverschleppung und somit zu Einbußen der Fertigungsausbeute führen kann.

### Aufgabe und vorteile der Erfindung

Aufgabe der Erfindung ist es demgegenüber, eine Vorrichtung zum berührungslosen Greifen und Halten eines Gegenstandes von einer Richtung, vorzugsweise von einer in Richtung der Schwerkraft gerichteten Richtung, vorzuschlagen, die ein Verschleppen bzw. Migrieren gegebenenfalls vorhandener Partikel weitestgehend vermeidet.

Diese Aufgabe wird, ausgehend von einer Vorrichtung der einleitend genannten Art, durch die kennzeichnenden Merkmale des Anspruchs 1 gelöst.

Durch die in den Unteransprüchen genannten Maßnahmen sind vorteilhafte Ausführungen und Weiterbildungen der Erfindung möglich.

Dementsprechend zeichnet sich eine erfindungsgemäße Vorrichtung dadurch aus, dass das Halteelement als schwingendes Halteelement zur Erzeugung von Levitationswellen ausgebildet ist.

In der Praxis hat sich überraschenderweise gezeigt, dass allein ein entgegen der Richtung der Schwerkraft oberhalb des Gegenstandes, d.h. entgegen der Schallausbreitungsrichtung, angeordnetes Halteelement, das insbesondere akustische Levitationswellen erzeugt, einen Gegenstand mit einem vorteilhaften Abstand greifen bzw. halten kann. Hierbei muss kein zweites Halteelement auf der dem schwingenden Halteelement gegenüberliegenden Seite des Gegenstandes angeordnet werden, wie z.B. ein Reflektor oder ein zweites schwingendes Halteelement zur Erzeugung stehender Wellen zwischen den beiden Halteelementen.

Darüber hinaus hat sich zudem gezeigt, dass der zu haltende bzw. zu greifende Gegenstand eine beliebige, insbesondere dreidimensionale Form bzw. Geometrie aufweisen kann. Mit einer erfindungsgemäßen Vorrichtung können weiterhin biegeschlaffe Teile wie Folien, Membranen, Papiere, Textilien oder dergleichen, fragile Bauteile wie Glaselemente, vergleichsweise dünne Halbleiterbauelemente oder ähnliche, sowie oberflächenbeschichtete Gegenstände bzw. Bauelemente mit berührungsempfindlichen Strukturen an deren Oberfläche berührungslos ergriffen, gehalten und positioniert werden.

Bislang sind bereits Vorrichtungen bekannt, die Gegenstände mit Hilfe dem physikalischen Prinzip der sogenannten Nahfeldlevitation berührungslos halten bzw. transportieren (vgl. z.B. US 5,810,155 oder DE 199 16 922). Diesen und vergleichbaren Vorrichtungen gemeinsam ist jedoch, dass der zu haltende bzw. zu transportierende Gegenstand oberhalb des schwingenden Halteelementes angeordnet ist, d.h. dass das schwingende Halteelement in Richtung der Schwerkraft unterhalb dem Gegenstand angeordnet ist.

Die Fachwelt ging bislang u.a. davon aus, das der Gegenstand aufgrund des Schalldrucks der Levitationswellen vom schwingenden Auflageelement lediglich weggedrückt werden kann. Dementsprechend werden bereits bekannte Vorrichtungen, die das Prinzip der akustischen Nahfeldevitation nützen, ausschließlich für Anwendungen vorgesehen, bei denen ein Untergreifen des Gegenstandes realisierbar ist.

Die Möglichkeit des Untergreifens des zu ergreifenden bzw. zu haltenden Gegenstandes ist mittels einer Vorrichtung gemäß der Erfindung nicht notwendig. Demzufolge ist es gemäß der Erfindung möglich, einen Gegenstand berührungslos an einer Aufnahmestelle ausschließlich von einer Seite bzw. von oben zu greifen und anzuheben, gegebenenfalls über eine gewisse Distanz zu transportieren und anschließend an einer beliebig ausgebildeten Ablagestelle zu positionieren. Nach Bekanntgabe der vorliegenden Erfindung ist davon auszugehen, dass die Fachwelt die hierfür notwendigen genauen Erklärungen nachliefert.

Vorzugsweise ist das schwingende Halteelement zur Auskopplung von Ultraschallwellen mit Frequenzen zwischen 16 kHz und 1 GHz, insbesondere zwischen 20 kHz und 40 kHz, ausgebildet. Mit Hilfe dieser Maßnahme können vorteilhafte Halteleistungen bzw. Haltekräfte zum Greifen und Halten des Gegenstandes realisiert werden. In vorteilhafter Weise ist eine Anpassung der Frequenzen in Abhängigkeit des zu greifenden bzw. zu haltenden Gegenstandes vorgesehen. Hiermit kann vor allem auch eine vorteilhafte Anpassung an die für den jeweiligen Anwendungsfall, beispielsweise für eine sogenannte "Pick & Place"-Aufgabe, erforderliche Verfahrdynamik umgesetzt werden.

In einer besonderen Weiterbildung der Erfindung ist eine dem Gegenstand gegenüber angeordnete Haltefläche des Halteelementes einem Oberflächenabschnitt des Gegenstandes angepasst. Hierbei kann der Oberflächenabschnitt des Gegenstandes eine beliebige, insbesondere dreidimensionale Form aufweisen, an die die Haltefläche des Halteelementes anzupassen ist.

Gegebenenfalls entspricht eine Projektion des Gegenstandes auf eine nahezu senkrecht zur Schwerkraft ausgerichteten Ebene weitestgehend einer Projektion der Haltefläche des Halteelementes der entsprechenden Ebene. Hierdurch wird in vorteilhafter Weise u.a. eine Verdrehsicherung bzw. Zentrierung des Gegenstandes aufgrund von vorteilhaften Randeffekten realisiert. Alternativ hierzu kann die Projektion der Haltefläche des Halteelementes kleiner als die Projektion des dazu gegenüber angeordneten Oberflächenabschnitts des Gegenstandes ausgebildet werden.

Diese Varianten der Erfindung ermöglichen vor allem auch ein vorteilhaftes Greifen und/oder Positionieren des Gegenstandes aus einer und/oder in eine Lücke, deren Fläche der entsprechenden Projektion des Gegenstandes weitgehend entspricht. Beispielsweise können elektrische oder mikromechanische Bauteile in eine Lücke zwischen anderen Bauteilen auf einem.Substrat positioniert werden, wobei die Lücke nahezu den Abmessungen des Bauteils entspricht. Hiermit ist gegebenenfalls eine vergleichsweise hohe Bauteildichte auf entsprechenden Substraten realisierbar, was zu einer vorteilhaften Miniaturisierung entsprechender Produkte führen kann.

Beispielsweise erfolgt die dreidimensionale Anpassung der Haltefläche an den Oberflächenabschnitt in der Weise, dass die Haltefläche zuzüglich eines entsprechenden Abstandes zum Gegenstand nahezu als Negativform des Oberflächenabschnitts auszubilden ist. So ist die Haltefläche des Halteelementes beispielsweise bei einer Kugel als zu haltender Gegenstand gegebenenfalls als kugelförmige Halbschale mit einem etwas größeren Durchmesser als der Kugeldurchmesser ausgebildet.

Darüber hinaus sind auch komplexere, dreidimensional ausgebildete Gegenstände, wie z.B. frisch lackierte Karosserieteile in der Automobilindustrie oder dergleichen, mit Hilfe von Halteelementen mit einer entsprechend angepassten, komplexen dreidimensionalen Haltefläche gemäß der Erfindung berührungslos zu greifen bzw. zu halten und gegebenenfalls von einer Aufnahmestelle zu einer Ablegestelle zu transportieren und zu positionieren bzw. auf eine Auflage anzupressen.

In vorteilhafter Weise ist ein Bereich des Oberflächenabschnitts quer zu einer Schwingungsrichtung des Halteelements in diesem Bereich angeordnet. Hierdurch wird gewährleistet, dass die Laufrichtung der Levitationswellen senkrecht zu dem Bereich des Gegenstandes ausgerichtet ist, was zu einer vorteilhaften Aufnahme der Halteleistung führt und somit vergleichsweise schwere Gegenstände gehalten bzw. gegriffen werden können.

In einer bevorzugten Variante der Erfindung weist die Haltefläche des Halteelementes wenigstens eine Öffnung mindestens einer Ausnehmung des Halteelementes auf. Hierbei kann die Öffnung und/oder die Ausnehmung einen beliebigen Querschnitt bzw. eine beliebige Form aufweisen.

Beim Umsetzen dieser Maßnahme hat sich gezeigt, dass größere Haltekräfte zum berührungslosen Greifen und Halten des Gegenstandes realisierbar sind. Dieser Beobachtung liegt die Annahme zugrunde, dass hierbei das in der Ausnehmung befindliche Gasvolumen u.a. in den Spalt zwischen dem Gegenstand und dem Halteelement gesogen wird, so dass ein Unterdruck in der Ausnehmung entstehen kann, der den Gegenstand gegen das Halteelement bzw. gegen die Richtung der Schwerkraft zieht. Hierdurch wird insbesondere auch eine verbesserte Verfahrdynamik der Vorrichtung mit gehaltenem Gegenstand realisiert. Beispielsweise kann das Halteelement beim Verfahren größere Beschleunigungen bzw. Verfahrgeschwindigkeiten realisieren.

Grundsätzlich ist eine Tiefe der Ausnehmung größer als eine Breite der Öffnung auszubilden, wodurch die Ausnehmung ein vergleichsweise großes Volumen aufweisen kann und gleichzeitig eine vergleichsweise große Haltefläche realisierbar ist. Die Ausnehmung ist an dem der Öffnung der Haltefläche gegenüberliegenden Ende gegebenenfalls offen auszubilden.

Vorzugsweise ist die Ausnehmung als Bohrung, insbesondere Sacklochbohrung, ausgebildet. Eine entsprechende Bohrung kann in vorteilhafter Weise ohne großen Aufwand in das Halteelement eingebracht werden, so dass sich der Fertigungsaufwand für ein Halteelement mit einer oder mehrerer Ausnehmungen minimieren lässt.

In einer besonderen Weiterbildung der Erfindung ist wenigstens eine zusätzliche Krafterzeugungseinheit zur Erzeugung einer gegen die Schwerkraft gerichteten zusätzlichen Kraft vorgesehen. Beispielsweise können hierfür magnetische, elektrostatische, elektrodynamische, pneumatische oder vergleichbare Kräfte mittels entsprechender Krafterzeugungseinheiten erzeugt werden. Hierbei ist in vorteilhafter Weise die Krafterzeugungseinheit ebenfalls entgegen der Richtung der Schwerkraft oberhalb des Gegenstandes angeordnet.

Vorteilhafterweise ist die Krafterzeugungseinheit als Druckerzeugungseinheit, vor allem als Unterdruckerzeugungseinheit, ausgebildet, insbesondere mit wenigstens einem Saugelement zum Ansaugen des Gegenstandes. Mit Hilfe dieser Maßnahme ist ein berührungsloses Greifen und Halten des Gegenstandes mit Hilfe von gegen die Schwerkraft gerichteten Zugkräften realisierbar, was zu einer weiteren Verbesserung der Verfahrdynamik der Vorrichtung bei gehaltenem Gegenstand gemäß der Erfindung führt. Für bestimmte Anwendungsfälle können in vorteilhafter Weise mehrere Saugelemente zur Vergrößerung der Zugkräfte verwendet werden.

Das Saugelement zum Ansaugen des Gegenstandes kann beispielsweise als um das Halteelement angeordnete Ringdüse, als einfache am Halteelement angeordnete Saugdüse und/oder vom Halteelement beabstandete Saugdüse ausgebildet werden. Im letztgenannten Fall ist dies insbesondere dann von Vorteil, wenn der Oberflächenabschnitt des Gegenstandes wesentlich größer als die Haltefläche des Halteelementes ist.

Darüber hinaus kann das Saugelement im Halteelement integriert werden. Vorzugsweise ist an einem der Öffnung der Haltefläche gegenüberliegenden offenen Ende der Ausnehmung die Druckerzeugungseinheit angeordnet. Hierdurch ist in relativ einfacher Weise die Integration des Saugelementes im Halteelement realisierbar, da die Ausnehmung zugleich als Saugelement verwendet wird.

Vorzugsweise wird die Druckerzeugungseinheit mittels bewährter schwingungsisolierter Anschlüsse an das schwingende Halteelement angeschlossen, beispielsweise an das offene Ende der Ausnehmung oder an speziell vorgesehene mit dem Halteelement mitschwingende Saugelemente.

In einer bevorzugten Variante der Erfindung ist eine Fixiereinheit zum Fixieren des Gegenstandes quer zur Richtung der Schwerkraft vorgesehen. Hierdurch kann sowohl eine Lateralzentrierung als auch eine Verdrehsicherung des schwebenden Gegenstandes realisiert werden, so dass beispielsweise ein seitliches Abgleiten des Gegenstandes, z.B. infolge von Neigungs- oder Beschleunigungskräften, wirkungsvoll verhindert wird. Die laterale Zentrierung und/oder Verdrehsicherung kann mittels einer Vielzahl von bereits bekannten Möglichkeiten erfolgen. Beispielsweise können feste oder bewegliche Anschläge oder dergleichen verwendet werden.

In vorteilhafter Weise wird eine Fixiereinheit verwendet, die zum berührungslosen Fixieren des Gegenstandes ausgebildet ist. Bei dieser Variante der Erfindung werden beispielsweise ein oder mehrere Fixierelemente verwendet, die als Saug- und/oder Druckdüse oder dergleichen ausgebildet sind.

Vorteilhafterweise ist ein schwingendes Fixierelement der Fixiereinheit zur Erzeugung von Levitationswellen vorgesehen. Hierbei kann das Fixierelement entsprechend dem Halteelement zur Erzeugung von Levitationswellen gegebenenfalls gemäß dem Prinzip der Nahfeldlevitation ausgebildet werden. Darüber hinaus kann eine Fixierung mittels schwingender Fixierelemente realisiert werden, die eine Ausbildung einer stehenden Welle zwischen den Fixierelementen ermöglicht.

In bevorzugter Weise kann das schwingende Halteelement zugleich als Fixierelement ausgebildet werden, wobei beispielsweise ein oder mehrere schwingende Fixierelemente in das Halteelement integriert werden und/oder das Halteelement mittels integrierter Fixierelemente zur Ausbildung unterschiedlicher, zum Rand des Halteelementes abnehmender Amplituden des Halteelementes ausgebildet werden.

Grundsätzlich kann mittels der Anpassung der Haltefläche des Halteelementes an den Oberflächenabschnitt des Gegenstandes zugleich auch eine Fixierung des Gegenstandes quer zur Richtung der Schwerkraft realisiert werden. Es hat sich in Versuchen gezeigt, dass eine berührungslose Selbstzentrierung des Gegenstandes bei einer weitgehenden Übereinstimmung der Geometrie, insbesondere von Abschnitte der Randbereiche, der Haltefläche des Halteelementes mit der Geometrie, insbesondere Abschnitten der Randbereiche, des Oberflächenabschnitts des Gegenstandes erfolgt. Hierdurch kann auf zusätzliche Fixierelemente gegebenenfalls verzichtet werden, was insbesondere den konstruktiven Aufwand der erfindungsgemäßen Vorrichtung reduziert.

In einer bevorzugten Variante der Erfindung sind mehrere Halteelemente und/oder Fixierelemente vorgesehen. Mit Hilfe dieser Maßnahme können beispielsweise mehrere Halteelemente mit jeweils vergleichsweise kleiner Haltefläche, insbesondere gleichmäßig über den zu den Halteelementen gekehrten Oberflächenabschnitt des Gegenstandes verteilt werden. Generell können auch mehrere Schwingungsquellen an einem und/oder mehreren Halteelementen angeordnet werden.

Diese Varianten ermöglichen insbesondere ein Greifen und Halten relativ großer Gegenstände, die möglicherweise eine vergleichsweise komplexe dreidimensionale Geometrie aufweisen, sowie gegebenenfalls eine Lateralzentrierung des Gegenstandes. Vorteilhafterweise können vor allem zur Lateralzentrierung des Gegenstands mehrere Halteelemente in Eck- bzw. Randbereichen des Gegenstandes angeordnet werden. Hierbei ist vorzugsweise eine weitgehende Übereinstimmung von Abschnitte der Randbereiche der Halteelemente und des Gegenstandes vorgesehen.

Bei diesen Varianten sind die Halteelemente bzw. Schwingungsquellen derart anzuordnen, dass die Schwingungsrichtung des Halteelements im dem Gegenstand gegenüberliegenden Bereich des Oberflächenabschnitts senkrecht bezüglich diesem Bereich ausgerichtet ist. Hiermit wird in besonders einfacher Weise die Anpassung der Halteflächen vor allem an komplexe Oberflächenabschnitte des Gegenstandes realisierbar.

Darüber hinaus kann in vorteilhafter Weise wenigstens ein Saugelement zwischen mehreren schwingenden Halteelementen angeordnet werden. Gegebenenfalls können auch mehrere Saugelemente bei der Verwendung von einem oder mehreren Halteelementen vorgesehen werden.

Grundsätzlich ist auch denkbar, dass gegebenenfalls mehrere Halteelemente und/oder Fixierelemente entlang einer vorgegebenen Transportstrecke angeordnet werden können, wobei der Gegenstand in Richtung der Schwerkraft unterhalb des bzw. der Halteelemente gemäß der Erfindung freischwebend angeordnet wird. Der Gegenstand wird hierbei vorteilhafterweise mittels bewährter und bekannter Verfahren zu einer Bewegung entlang der Transportstrecke veranlasst. Vorzugsweise wird die Bewegung des Gegenstands mittels winklig zur Transportrichtung angeordneter Saugelemente verwirklicht.

Alternativ hierzu wird das Halteelement insbesondere vertikal und/oder horizontal bewegbar mit Hilfe wenigstens eines Hebe- und/oder Schwenkarmes ausgebildet, so dass in vorteilhafter Weise der Gegenstand eine definierte Lageänderung von einer Aufnahmestelle zu einer Ablegestelle ausführen kann.

Generell kann die Rückwirkung des Gegenstandes bzw. Halteelements auf den Schwingungserzeuger, beispielsweise die Leistungsaufnahme, mittels einer entsprechenden Auswerteeinheit ermittelt und ausgewertet werden, so dass hierdurch in vorteilhafter Weise feststellbar ist, ob der Gegenstand von der Vorrichtung gehalten wird oder nicht bzw. welche Kraft berührungslos auf den Gegenstand aufgebracht wird. Diese Maßnahme ermöglicht eine vorteilhafte Kontrolle des Greifens bzw. Haltens sowie des Positionierens des Gegenstands und beispielsweise der Kräfte beim Aufpressen. In bevorzugter Weise wird die Leistungsaufnahme des Gegenstandes mittels einer Erfassung einer elektrischen Spannung bzw. eines elektrischen Stromes einer piezo-elektrischen Schwingungserzeugungseinheit ermittelt.

### Ausführungsbeispiel

Ein Ausführungsbeispiel der Erfindung ist in der Zeichnung dargestellt und wird anhand der Figuren nachfolgend näher erläutert.

Im Einzelnen zeigt:
- Fig. 1: eine schematische Ansicht einer erfindungsgemäßen Vorrichtung,
- Fig. 2: einen schematischen Querschnitt durch ein erfindungsgemäßes Halteelement mit integrierter Saugbohrung,
- Fig. 3: einen schematischen Querschnitt durch ein weiteres erfindungsgemäßes Halteelement mit Sacklochbohrung,
- Fig. 4: verschiedene perspektivisch dargestellte Varianten weiterer erfindungsgemäßer Halteelemente,
- Fig. 5: verschiedene schematisch dargestellte erfindungsgemäße Vorrichtungen mit berührungsloser Ultraschall-Lateralzentrierung,
- Fig. 6: verschiedene schematisch dargestellte erfindungsgemäße Vorrichtungen mit berührungsloser aerostatischer Lateralzentrierung,
- Fig. 7: verschiedene schematische dargestellte erfindungsgemäße Vorrichtungen mit mechanisch-taktiler Lateralzentrierung und
- Fig. 8: in schematischer Darstellung verschiedene Arbeitsschritte eines Aufnahme- bzw. Absetzvorganges mittels einer erfindungsgemäßen Vorrichtung.

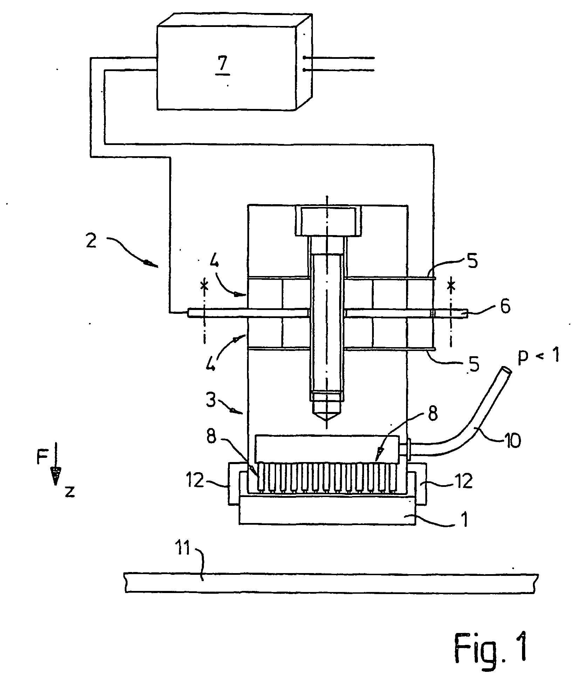

In Fig. 1 ist ein schematischer Aufbau einer erfindungsgemäßen Vorrichtung zum berührungslosen Greifen und Halten eines Gegenstandes 1, wie beispielsweise eines Chips 1, dargestellt. Bei dem Gegenstand 1 kann es sich jedoch auch um sonstige fragile, biegeschlaffe und/oder oberflächenempfindliche Bauteile wie beispielsweise Papier, Textilien, Membranen, Folien, mikrosystemtechnische Bauteile, Halbleiterelemente, toxische bzw. kontaminierte oder anderweitig für den Menschen gefährliche Gegenstände, vor allem der chemischen und/oder pharmazeutischen Industrie, vergleichsweise heiße und/oder kalte Elemente, frisch lackierte Gegenstände, insbesondere der Automobilindustrie oder sonstiger technischer Anwendungen, Glassubstrate in der Fertigung von Flachbildschirmen oder dergleichen handeln.

Eine Einheit 2 zur Erzeugung von Ultraschallschwingungen umfasst hierfür eine Sonotrode 3, Piezoelemente 4, Anschlüsse 5, eine Knotenplatte 6 sowie eine Ansteuerelektronik 7.

In bekannter Weise wird hierdurch die Sonotrode 3 zum Schwingen angeregt, so dass dieser Ultraschall-Levitationswellen zum berührungslosen Greifen und Halten des Chips 1 erzeugen bzw. auskoppeln kann.

Gemäß der Erfindung ist der Chip 1 in Richtung z der Schwerkraft F unterhalb der Sonotrode 3 angeordnet.

In der Variante der Erfindung gemäß Fig. 1 weist die Sonotrode 3 mehrere Bohrungen 8 auf, die in einem Sammelkanal 9 münden und mit einer nicht näher dargestellten Vakuumpumpe mittels einer schwingungsisolierten Anschlussleitung 10 verbunden sind. Mit Hilfe der nicht näher dargestellten Druckerzeugungseinheit wird insbesondere ein Unterdruck p zum Erzeugen einer gegen die Schwerkraft F gerichteten pneumatischen Zugkraft erzeugt. Diese pneumatische Zugkraft verbessert das Greifen bzw. Halten des Chips 1 mittels der erfindungsgemäßen Vorrichtung.

In Fig. 1 wird zudem deutlich, dass diese erfindungsgemäße Vorrichtung zum Greifen und Halten eines Chips 1 ausgebildet ist, wobei der Chip 1 beispielsweise auf einer Auflage 11 zu greifen bzw. wieder abzusetzen ist, ohne dass hierbei Halteelemente auf der der Vorrichtung gegenüberliegenden Seite der Auflage 11 vorzusehen sind.

Darüber hinaus sind in Fig. 1 zwei mechanische Anschläge 12 zur lateralen Fixierung des Chips 1 dargestellt. In bestimmten Anwendungsfällen kann gegebenenfalls eine mechanische Berührung der Randbereiche bzw. der Seiten und/oder Teilen der Unterseite des zu greifenden bzw. zu haltenden Gegenstandes 1 vor allem zwischen dem Anheben und dem Absetzen toleriert werden.

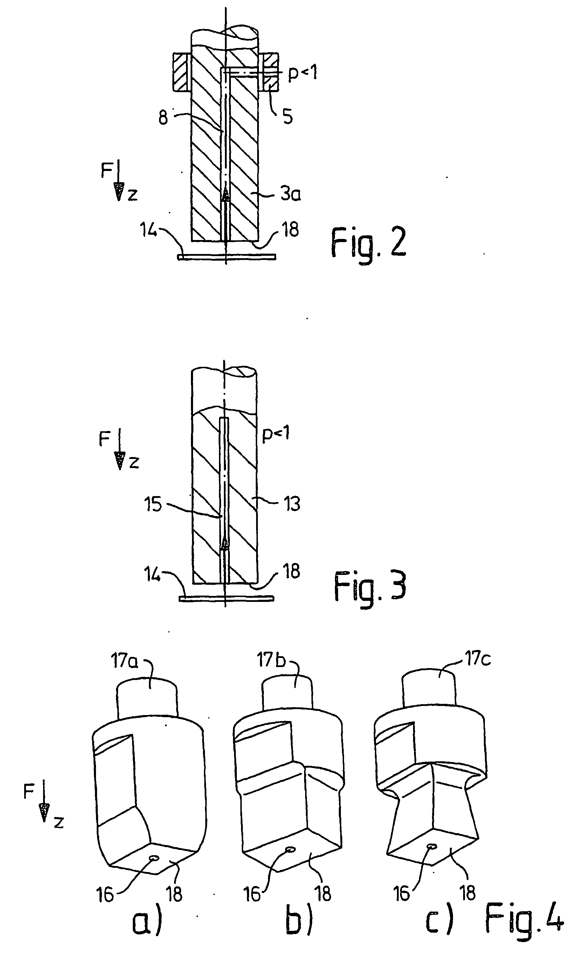

In Fig. 2 ist schematisch eine Sonotrode 3a lediglich mit einer Saugbohrung 8 dargestellt. Die Saugbohrung 8 ist in nicht näher dargestellter Weise mittels einem schwingungsisolierten Anschluss 5 mit einer Vakuumpumpe verbunden. Die Sonotrode 3a schwingt beispielsweise mit einer Ultraschallfrequenz von 20 bis 40 kHz, so dass ein Bauteil 14 berührungslos entgegen der Richtung z der Schwerkraft F unterhalb des Kopfschwingers 3a zu greifen bzw. zu halten ist.

In Fig. 3 ist eine Sonotrode 13 mit einer Sacklochbohrung 15 dargestellt. Gemäß der Erfindung wird die Sonotrode 13 vor allem in einer Greif- bzw. Haltephase zum Schwingen mit einer Frequenz zwischen 20 und 40 kHz versetzt, so dass das Bauteil 14 in Richtung z der Schwerkraft F betrachtet unterhalb der Sonotrode 13 gehalten wird.

Gemäß Fig. 4 sind verschiedenste Formen bzw. Ausgestaltungsmöglichkeiten von Sonotroden 17a, b, c vorteilhaft. Hierbei sind Halteflächen 18 beispielsweise an ein nicht näher dargestelltes Bauteil angepasst. Die Halteflächen 18 entsprechen nahezu einem der Haltefläche 18 zugekehrtem Oberflächenabschnitt des Bauteils, beispielsweise eines Sensorchips. Der nicht näher dargestellte Sensorchip weist wie die Halteflächen 18 ebenfalls eine rechteckige Querschnittsfläche auf. Mit Hilfe dieser Maßnahme ist eine berührungslose Selbstzentrierung einschließlich einer Verdrehsicherung des nicht näher dargestellten Bauteils unterhalb der Sonotroden 17a, b, c realisierbar.

Grundsätzlich ist die Lateralzentrierung der Sonotrode 17c besser als die der Sonotrode 17b und diese wiederum besser als die der Sonotrode 17a. Vermutlich sind hierfür vorteilhafte Randeffekte bzw. Strömungsprofile am Rand der Halteflächen 18 von Bedeutung.

Weiterhin zeigt Fig. 4 optional vorzusehende Öffnungen 16 von nicht näher dargestellten Ausnehmungen, die beispielsweise als Bohrung 8 oder Sacklochbohrung 15 ausgebildet werden können.

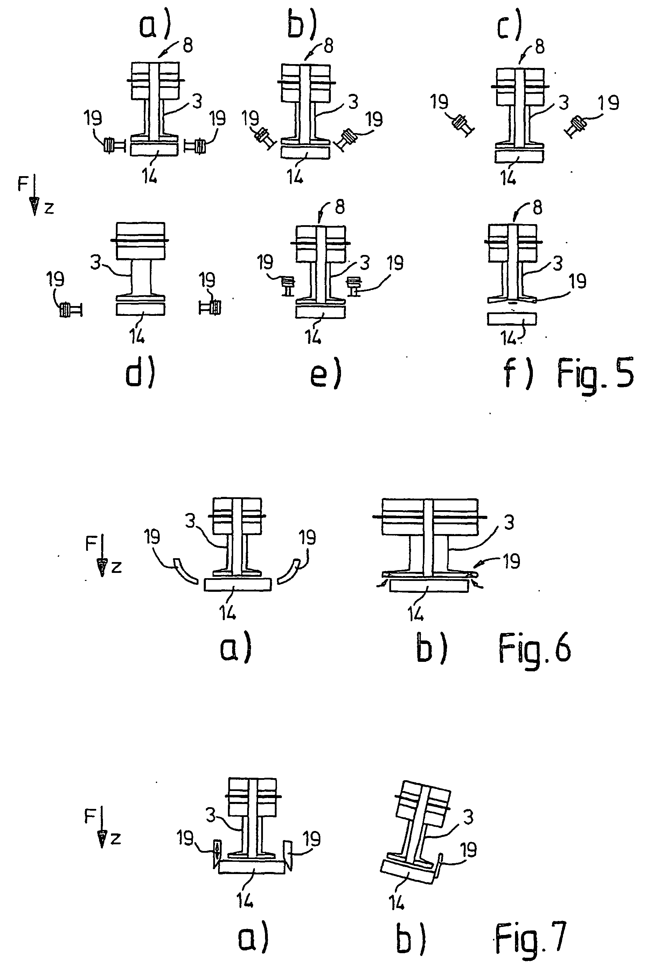

In Fig. 5 sind verschiedenste Verfahren bzw. erfindungsgemäße Vorrichtungen mit berührungsloser Ultraschall-Lateralzentrierung dargestellt. Hierbei wird insbesondere eine Vorrichtung mit einer Sonotrode 3 in Anlehnung an die Vorrichtung gemäß Fig. 1 verwendet.

Gegenüber der Vorrichtung gemäß Fig. 1 wird bei den Varianten gemäß Fig. 5 eine laterale Zentrierung des Bauteils 14 mittels schwingender Fixierelemente 19 realisiert. In Fig. 5a sowie 5b erfolgt die Zentrierung nach dem Prinzip der akustischen Nahfeldzentrierung, wobei die Fixierelemente 19 gegebenenfalls in der Sonotrode 3 integriert werden können.

Gemäß Fig. 5c erfolgt die Zentrierung durch ein Halten des Bauteils 14 im ersten Knoten der Schwingungswellen. In Fig. 5d erfolgt die Fixierung des Bauteils 14 mittels einer nicht näher dargestellten stehenden Welle, wobei insbesondere zwei sich gegenüberliegende Fixierelemente 19 zu verwenden sind, wobei zwei schwingende bzw. ein schwingendes und ein reflektierendes Fixierelement 19 vorgesehen werden kann.

Die Lateralzentrierung gemäß Fig. 5e erfolgt durch Bernoulli-Effekte einer außen stehenden Welle mittels der Fixierelemente 19, wobei diese gegebenenfalls in der Sonotrode 3 integriert werden können.

Gemäß Fig. 5f kann die Zentrierung des Bauteils 14 mittels unterschiedlicher Amplituden der Sonotrode 3 realisiert werden, wobei die Amplituden radial nach außen abnehmen. Das Fixierelement 19 ist hierbei insbesondere im Stirnbereich der Sonotrode 3 integriert.

Gemäß Fig. 6 sind weitere Varianten zur berührungslosen Zentrierung des Bauteils 14 dargestellt, wobei diese mittels pneumatischem Anblasen gemäß Fig. 6a bzw. mittels einer Selbstzentrierung aufgrund einer Ringdüse bzw. Bernoulli-Effekte erfolgt.

In Fig. 7 sind mechanisch taktile Fixierelemente 19 zum Fixieren des Bauteils 14 dargestellt.

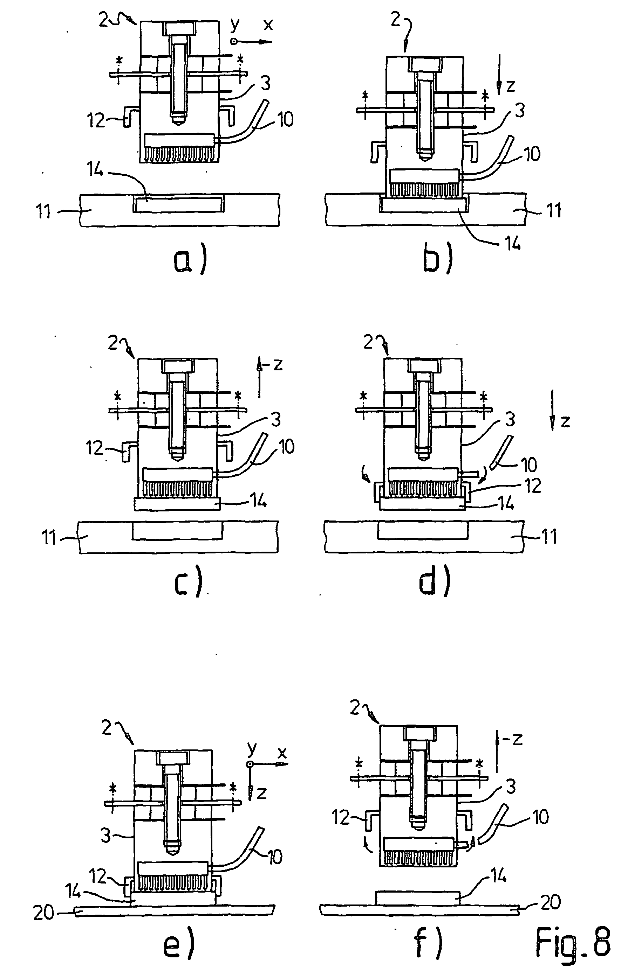

Fig. 8 zeigt in schematischer Weise ein Aufnahme- bzw. Absetzvorgang eines Bauteils 14 mittels einer erfindungsgemäßen Vorrichtung. Gemäß Fig. 8a wird die Vorrichtung über dem in einem sogenannten Chiptray befindenden Bauteil 14 gemäß Fig. 1 positioniert, wobei das Chiptray zugleich die Auflage 11 des Bauteils 14 bildet.

Anschließend wird gemäß Fig. 8b das Bauteil 14 berührungslos mittels dem Kopfschwinger 3 gegriffen und gemäß Fig. 8c von der Auflage 11 angehoben. Nahezu gleichzeitig bzw. daran anschließend erfolgt die Zentrierung des Bauteils 14 gemäß Fig. 8d durch eine Bewegung der Anschläge 12 in die Richtung z und entlang einer Richtung x, so dass das Bauteil 14 gegen seitliches Verrutschen gesichert ist.

In nicht näher dargestellter Weise erfolgt ein Transport der Einheit 2 mit dem Bauteil 14 in Richtung x und/oder Richtung y weg von der Auflage 11 hin zu einem Substrat 20. An vorgegebener Stelle wird die Einheit 2 über dem Substrat 20 positioniert und anschließend erfolgt ein kraftgeregeltes, berührungsloses Fügen des Bauteiles 14 auf dem Substrat 20. Hierbei wird in vorteilhafter Weise die progressive Zunahme der Tragkraft entgegen der Richtung z in Abhängigkeit des nicht näher dargestellten Abstands zwischen dem Bauteil 14 und der Sonotrode 3 zur Erzeugung einer auf das Substrat 20 gerichteten Anpresskraft von wenigen Milli-Newton bis einigen 1000 Kilo-Newton verwendet. Abschließend erfolgt das Abheben der abgeschalteten Einheit 2 gemäß Fig. 8f in Richtung -z.

## Patentansprüche

1. Vorrichtung zum berührungslosen Greifen und Halten eines Gegenstandes (1, 14) mittels eines beabstandet zum Gegenstand (1, 14) angeordneten Halteelementes (3, 13, 17), das auf den Gegenstand (1, 14) wirkende, von wenigstens einer Schallquelle hervorgerufene Levitationswellen erzeugt, wobei das Halteelement (3, 13, 17) entgegen der Richtung (z) der Schwerkraft (F) oberhalb des Gegenstandes (1, 14), das heißt entgegen der Schallausbreitungsrichtung angeordnet ist, **dadurch gekennzeichnet, dass** auf der dem schwingenden Halteelement (3, 13, 17) gegenüberliegenden Seite des Gegenstandes (1, 14) kein zweites Halteelement oder kein Reflektor angeordnet ist.

2. Vorrichtung nach Anspruch 1, **dadurch gekennzeichnet, dass** das schwingende Halteelement (3, 13, 17) zur Erzeugung von Ultraschallwellen mit Frequenzen zwischen 16 kHz und 1 GHz ausgebildet ist.

3. Vorrichtung nach einem der vorgenannten Ansprüche, **dadurch gekennzeichnet, dass** eine dem Gegenstand (1, 14) gegenüber angeordnete Haltefläche (18) des Halteelementes einem Oberflächenabschnitt des Gegenstandes (1, 14) angepasst ist.

4. Vorrichtung nach einem der vorgenannten Ansprüche, **dadurch gekennzeichnet, dass** ein Bereich des Oberflächenabschnitts quer zu einer Schwingungsrichtung (z) des Halteelements (3, 13, 17) in diesem Bereich angeordnet ist.

5. Vorrichtung nach einem der vorgenannten Ansprüche, **dadurch gekennzeichnet, dass** die Haltefläche (18) des Halteelements (3, 13, 17) wenigstens eine Öffnung (16) mindestens einer Ausnehmung (8, 15) des Halteelements (3, 13, 17) aufweist.

6. Vorrichtung nach einem der vorgenannten Ansprüche, **dadurch gekennzeichnet, dass** die Ausnehmung (8, 15) als Bohrung (8, 15) ausgebildet ist.

7. Vorrichtung nach einem der vorgenannten Ansprüche, **dadurch gekennzeichnet, dass** wenigstens eine zusätzliche Krafterzeugungseinheit zur Erzeugung einer gegen die Schwerkraft (F) gerichteten zusätzlichen Kraft vorgesehen ist.

8. Vorrichtung nach einem der vorgenannten Ansprüche, **dadurch gekennzeichnet, dass** die Krafterzeugungseinheit als Druckerzeugungseinheit ausgebildet ist.

9. Vorrichtung nach einem der vorgenannten Ansprüche, **dadurch gekennzeichnet, dass** die Druckerzeugungseinheit wenigstens ein Saugelement (8) zum Ansaugen des Gegenstandes (1, 14) aufweist.

10. Vorrichtung nach einem der vorgenannten Ansprüche, **dadurch gekennzeichnet, dass** an einem der Öffnung (16) gegenüberliegenden Ende der Ausnehmung (8, 15) die Druckerzeugungseinheit angeordnet ist.

11. Vorrichtung nach einem der vorgenannten Ansprüche, **dadurch gekennzeichnet, dass** eine Fixiereinheit (12, 19) zum Fixieren des Gegenstandes (1, 14) quer (x, y) zur Richtung (z) der Schwerkraft (F) vorgesehen ist:

12. Vorrichtung nach einem der vorgenannten Ansprüche, **dadurch gekennzeichnet, dass** die Fixiereinheit (12, 19) zum berührungslosen Fixieren des Gegenstandes (1, 14) ausgebildet ist.

13. Vorrichtung nach einem der vorgenannten Ansprüche, **dadurch gekennzeichnet, dass** ein schwingendes Fixierelement (19) der Fixiereinheit (12, 19) zur Erzeugung von Levitationswellen vorgesehen ist.

14. Vorrichtung nach einem der vorgenannten Ansprüche, **dadurch gekennzeichnet, dass** mehrere Halteelemente (3, 13, 17) und/oder Fixierelemente (12, 19) vorgesehen sind.

15. Verfahren zum berührungslosen Greifen und Halten eines Gegenstandes (1, 14) von einer wenigstens teilweise in Richtung (z) der Schwerkraft (F) gerichteten Richtung (z) mit wenigstens einem entgegen der Richtung (z) der Schwerkraft (F) wenigstens teilweise oberhalb des Gegenstandes (1, 14) und von diesem beabstandet angeordneten Halteelement (3, 13, 17), **dadurch gekennzeichnet, dass** eine Vorrichtung nach einem der vorgenannten Ansprüche mit einem schwingenden Halteelement (3, 13, 17) zur Erzeugung von Levitationswellen verwendet wird.

## Claims

1. Device for gripping and holding an object (1, 14) without contact by means of a holding element (3, 13, 17) which is arranged at a distance from the object (1, 14) and generates levitation waves caused by at least one sound source that act on the object (1, 14), the holding element (3, 13, 17) being arranged above the object (1, 14), counter to the direction (z) of the force of gravity (F), that is to say counter to the sound propagation direction, **characterized in that** no second holding element or reflector is arranged on the side of the object (1, 14) opposite to the oscillating holding element (3, 13, 17).

2. Device according to Claim 1, **characterized in that** the oscillating holding element (3, 13, 17) is designed to generate ultrasonic waves with frequencies between 16 kHz and 1 GHz.

3. Device according to one of the preceding claims, **characterized in that** a holding surface (18) of the holding element that is arranged opposite the object (1, 14) is matched to a surface section of the object (1, 14).

4. Device according to one of the preceding claims, **characterized in that** a region of the surface section is arranged transversely with respect to an oscillation direction (z) of the holding element (3, 13, 17) in this region.

5. Device according to one of the preceding claims, **characterized in that** the holding surface (18) of the holding element (3, 13, 17) has at least one opening (16) of at least one recess (8, 15) of the holding element (3, 13, 17).

6. Device according to one of the preceding claims, **characterized in that** the recess (8, 15) is formed as a drilled hole (8, 15).

7. Device according to one of the preceding claims, **characterized in that** at least one additional force generating unit is provided to generate an additional force oriented counter to the force of gravity (F).

8. Device according to one of the preceding claims, **characterized in that** the force generating unit is constructed as a pressure generating unit.

9. Device according to one of the preceding claims, **characterized in that** the pressure generating unit has at least one suction element (8) for attracting the object (1, 14) by suction.

10. Device according to one of the preceding claims, **characterized in that** the pressure generating unit is arranged at an end of the recess (8, 15) opposite the opening (16).

11. Device according to one of the preceding claims, **characterized in that** a fixing unit (12, 19) is provided to fix the object (1, 14) transversely (x, y) with respect to the direction (z) of the force of gravity (F).

12. Device according to one of the preceding claims, **characterized in that** the fixing unit (12, 19) is constructed to fix the object (1, 14) without contact.

13. Device according to one of the preceding claims, **characterized in that** an oscillating fixing element (19) of the fixing unit (12, 19) is provided to generate levitation waves.

14. Device according to one of the preceding claims, **characterized in that** a plurality of holding elements (3, 13, 17) and/or fixing elements (12, 19) are provided.

15. Method for gripping and holding an object (1, 14) without contact from a direction (z) at least partly oriented in the direction (z) of the force of gravity (F) by using at least one holding element (3, 13, 17) which is at least partly arranged above the object (1, 14), counter to the direction (z) of the force of gravity (F) and at a distance from the said object (1, 14), **characterized in that** a device according to one of the preceding claims is used, having an oscillating holding element (3, 13, 17) for generating levitation waves.

## Revendications

1. Dispositif permettant de saisir et de tenir sans contact un objet (1, 14) au moyen d'un élément de maintien (3, 13, 17) écarté de l'objet (1, 14) et qui génère des ondes de lévitation agissant sur l'objet (1, 14), provoquées par au moins une source sonore, l'élément de maintien (3, 13, 17) étant disposé à l'opposé de la direction (z) de la pesanteur (F) au-dessus de l'objet (1, 14), c'est-à-dire à l'opposé de la direction de propagation du son,
**caractérisé en ce qu'**
aucun second élément de maintien ou aucun réflecteur n'est disposé du côté de l'objet (1, 14) opposé à l'élément de maintien vibrant (3, 13, 17).

2. Dispositif selon la revendication 1,
**caractérisé en ce que**
l'élément de maintien vibrant (3, 13, 17) est conçu pour générer des ondes ultrasonores à des fréquences comprises entre 16 kHz et 1 GHz.

3. Dispositif selon l'une des revendications précédentes,
**caractérisé en ce qu'**
une surface de maintien (18) de l'élément de maintien, disposée en face de l'objet (1, 14), est adaptée à une section de surface de l'objet (1, 14).

4. Dispositif selon l'une des revendications précédentes,
**caractérisé en ce qu'**
une zone de la section de surface perpendiculaire à une direction de vibration (z) de l'élément de maintien (3, 13, 17) est disposée dans cette zone.

5. Dispositif selon l'une des revendications précédentes,
**caractérisé en ce que**
la surface de maintien (18) de l'élément de maintien (3, 13, 17) présente au moins une ouverture (16) d'au moins un évidement (8, 15) de l'élément de maintien (3, 13, 17).

6. Dispositif selon l'une des revendications précédentes,
**caractérisé en ce que**
l'évidement (8, 15) est configuré sous forme de perçage (8, 15).

7. Dispositif selon l'une des revendications précédentes,
**caractérisé en ce qu'**
au moins une unité de génération de force supplémentaire est prévue pour générer une force supplémentaire orientée à l'opposé de la pesanteur (F).

8. Dispositif selon l'une des revendications précédentes,
**caractérisé en ce que**
l'unité de génération de force est une unité de génération de pression.

9. Dispositif selon l'une des revendications précédentes,
**caractérisé en ce que**
l'unité de génération de force présente au moins un élément d'aspiration (8) pour aspirer l'objet (1, 14).

10. Dispositif selon l'une des revendications précédentes,
**caractérisé en ce que**
l'unité de génération de pression est disposée au niveau d'une extrémité de l'évidement (8, 15) opposée à l'ouverture (16).

11. Dispositif selon l'une des revendications précédentes,
**caractérisé en ce qu'**
une unité de fixation (12, 19) est prévue pour fixer l'objet (1, 14) perpendiculairement (x, y) à la direction (z) de la pesanteur (F).

12. Dispositif selon l'une des revendications précédentes,
**caractérisé en ce que**
l'unité de fixation (12, 19) est conçue pour fixer sans contact l'objet (1, 14).

13. Dispositif selon l'une des revendications précédentes,
**caractérisé en ce qu'**
un élément de fixation vibrant (19) de l'unité de fixation (12, 19) est prévu pour générer des ondes de lévitation.

14. Dispositif selon l'une des revendications précédentes,
**caractérisé en ce que**
plusieurs éléments de maintien (3, 13, 17) et/ou éléments de fixation (12, 19) sont prévus.

15. Procédé permettant de saisir et de tenir sans contact un objet (1, 14) à partir d'une direction (z) orientée au moins partiellement dans la direction (z) de la pesanteur (F) à l'aide d'au moins un élément de maintien (3, 13, 17) disposé à l'opposé de la direction (z) de la pesanteur (F), au moins partiellement au-dessus de l'objet (1, 14) et à distance de celui-ci,
**caractérisé en ce que**
l'on utilise un dispositif selon l'une des revendications précédentes, comprenant un élément de maintien vibrant (3, 13, 17) pour générer des ondes de lévitation.
